# EUROPEAN PATENT APPLICATION

(11) **EP 4 488 146 A1**
(43) Date of publication of application: **08.01.2025**
(21) Application number: 22936851.9
(22) Date of filing: 13.04.2022
(51) Int. Cl.: B62D 5/04

(54) **STEERING CONTROL APPARATUS, STEERING SYSTEM, AND VEHICLE**

(71) Applicant: Shenzhen Yinwang Intelligent Technologies Co., Ltd., Shenzhen, Guangdong 518129 (CN)
(72) Inventor: LIU, Zheng, Shenzhen, Guangdong 518129 (CN); QUE, Fasong, Shenzhen, Guangdong 518129 (CN); LUO, Yi, Shenzhen, Guangdong 518129 (CN); WANG, Lei, Shenzhen, Guangdong 518129 (CN)
(74) Representative: MERH-IP Matias Erny Reichl Hoffmann Patentanwälte PartG mbB
(86) International application number: PCT/CN2022/086523
(87) International publication number: WO 2023/197197

(57) **Abstract**

A steering control apparatus, a steering system, and a vehicle are provided. The apparatus includes: a first steering control assembly, a second steering control assembly, a first switching control assembly, a second switching control assembly, a first motor assembly, and a second motor assembly. The first steering control assembly includes a first switch group connected to the first motor assembly and a second switch group connected to the second motor assembly. The second steering control assembly includes a third switch group connected to the first motor assembly and a fourth switch group connected to the second motor assembly. The first switching control assembly includes a first switching control circuit configured to control the first switch group and a second switching control circuit configured to control the third switch group. The second switching control assembly includes a third switching control circuit configured to control the second switch group and a fourth switching control circuit configured to control the fourth switch group. The two steering control assemblies are respectively connected to the two motor assemblies, and when one of the steering control assemblies is faulty, the steering control assembly that is not faulty may independently drive the two motor assemblies simultaneously, to ensure stability of a steering effect, and reduce a safety risk.

## Description

### TECHNICAL FIELD

This application relates to the field of vehicle technologies, and in particular, to a steering control apparatus, a steering system, and a vehicle.

### BACKGROUND

A function of a steering system of a vehicle is to control a driving direction of the vehicle according to an instruction of a driver or an instruction of an autonomous driving system. The steering system is critical to driving safety of the vehicle.

Currently, a known steering system includes two steering control assemblies. Each of the two steering control assemblies is connected to a motor assembly. The steering control assembly may drive the connected motor assembly to perform a steering operation. When either of the two steering control assemblies is faulty, the steering control assembly that is not faulty may drive the motor assembly connected to the steering control assembly. However, when one steering control assembly is faulty, only one motor assembly performs the steering operation. In this case, a steering effect is unstable, and a specific driving safety risk exists.

### SUMMARY

This application provides a steering control apparatus, a steering system, and a vehicle, to improve safety performance of the steering system, and reduce a driving safety risk.

According to a first aspect, this application provides a steering control apparatus. The apparatus includes: a first steering control assembly, a second steering control assembly, a first switching control assembly, a second switching control assembly, a first motor assembly, and a second motor assembly. The first steering control assembly includes a first switch group connected to the first motor assembly and a second switch group connected to the second motor assembly, and is configured to: provide a drive current for the first motor assembly when the first switch group is turned on, and provide a drive current for the second motor assembly when the second switch group is turned on. The second steering control assembly includes a third switch group connected to the first motor assembly and a fourth switch group connected to the second motor assembly, and is configured to: provide a drive current for the first motor assembly when the third switch group is turned on, and provide a drive current for the second motor assembly when the fourth switch group is turned on. The first switching control assembly includes a first switching control circuit configured to control the first switch group and a second switching control circuit configured to control the third switch group. An output level of the first switching control circuit is different from an output level of the second switching control circuit. The second switching control assembly includes a third switching control circuit configured to control the second switch group and a fourth switching control circuit configured to control the fourth switch group. An output level of the third switching control circuit is different from an output level of the fourth switching control circuit.

Based on the foregoing solution, the two steering control assemblies are respectively connected to the two motor assemblies. When one of the steering control assemblies is faulty, the steering control assembly that is not faulty may independently drive the two motor assemblies simultaneously, to ensure stability of a steering effect. Different switch groups connected to a same motor assembly are separately controlled through different switching control circuits, so that the different switch groups connected to the same motor assembly are not simultaneously turned on or off. Therefore, a case in which loops are cross-connected is avoided, safety performance is improved, and a driving safety risk is reduced.

With reference to the first aspect, in some possible designs, the first motor assembly includes N armature windings, and the second motor assembly includes M armature windings, where N and M are positive integers. A quantity of switches in the first switch group and a quantity of switches in the third switch group are the same as a quantity of armature windings included in the first motor assembly. A quantity of switches in the second switch group and a quantity of switches in the fourth switch group are the same as a quantity of armature windings included in the second motor assembly.

With reference to the first aspect, in some possible designs, the first switching control circuit includes N branches. The N branches are in a one-to-one correspondence with N switches in the first switch group. An output end of each of the N branches is connected to one corresponding switch. When output levels of the N branches are all a first level, the switches in the first switch group are turned on; or when output levels of the N branches are all a second level, the switches in the first switch group are turned off. The fourth switching control circuit includes M branches. The M branches are in a one-to-one correspondence with M switches in the fourth switch group. An output end of each of the M branches is connected to one corresponding switch. When output levels of the M branches are all the first level, the switches in the fourth switch group are turned on; or when output levels of the M branches are all the second level, the switches in the fourth switch group are turned off.

The first level may be a high level, and the second level may be a low level; or the first level may be a low level, and the second level may be a high level. This is not limited in this application.

In other words, an input end of each branch is connected to a switch, and each branch is configured to control turning on or off of the connected switch.

With reference to the first aspect, in some possible designs, each of the N branches includes one or more input ends, and each input end is configured to receive one level signal. Each of the M branches includes one or more input ends, and each input end is configured to receive one level signal.

Based on the foregoing design, one input end or a plurality of input ends may be designed according to a control requirement, to provide good flexibility.

Optionally, the level signal received by the one or more input ends includes a level signal output by a motor control unit (motor control unit, MCU).

Optionally, the level signal received by the one or more input ends further includes a level signal output by a power management chip and/or a level signal output by a drive chip.

With reference to the first aspect, in some possible designs, a level signal received by each of the N branches includes a plurality of level signals. When at least one of the plurality of level signals is at the second level, an output level of each of the N branches is the second level; or when each of the plurality of level signals is at the first level, an output level of each of the N branches is the first level. A level signal received by each of the M branches includes a plurality of level signals. When at least one of the plurality of level signals is at the second level, an output level of each of the M branches is the second level; or when each of the plurality of level signals is at the first level, an output level of each of the M branches is the first level.

With reference to the first aspect, in some possible designs, the second switching control circuit includes one input end and N output ends. The input end is connected to output ends of the N branches of the first switching control circuit. The N output ends are in a one-to-one correspondence with N switches in the third switch group. Each of the N output ends is connected to one corresponding switch. When output levels of the N output ends are all the first level, the switches in the third switch group are turned on; or when output levels of the N output ends are all the second level, the switches in the third switch group are turned off. The third switching control circuit includes one input end and M output ends. The input end is connected to output ends of the M branches of the fourth switching control circuit. The M output ends are in a one-to-one correspondence with M switches in the second switch group. Each of the M output ends is connected to one corresponding switch. When output levels of the M output ends are all the first level, the switches in the second switch group are turned on; or when output levels of the M output ends are all the second level, the switches in the second switch group are turned off.

The output ends of the N branches of the first switching control circuit are connected to the input ends of the second switching control circuit. In other words, output signals of the output ends of the N branches of the first switching control circuit are used as input signals of the input ends of the second switching control circuit. Based on the output signals of the first switching control circuit, the second switching circuit outputs a level signal different from that of the first switching control circuit. For example, when the output signals of the branches of the first switching control circuit are all at the first level, the second switching control circuit outputs the second level, so that the third switch group is turned off when the first switch group is turned on or the third switch group is turned on when the first switch group is turned off. Similarly, the output ends of the M branches of the fourth switching control circuit are connected to the input ends of the third switching control circuit. In other words, output signals of the output ends of the M branches of the fourth switching control circuit are used as input signals of the input ends of the third switching control circuit. Based on the output signals of the fourth switching control circuit, the third switching circuit outputs a level signal different from that of the fourth switching control circuit. For example, when the output signals of branches of the fourth switching control circuit are all at the first level, the third switching control circuit outputs the second level, so that the second switch group is turned off when the fourth switch group is turned on, or the second switch group is turned on when the fourth switch group is turned off. Therefore, a case in which loops are cross-connected can be avoided, safety performance is improved, and a driving safety risk is reduced.

Optionally, that an output level of the first switching control circuit is different from an output level of the second switching control circuit includes: When the output levels of the output ends of the N branches of the first switching control circuit are all the first level, the switches in the first switch group are turned on, a level signal of the input end of the second switching control circuit is the first level, output levels of the N output ends of the second switching control circuit are all the second level, and the switches in the third switch group are turned off; or when the output levels of the output ends of the N branches of the first switching control circuit are all the second level, the switches in the first switch group are turned off, a level signal of the input end of the second switching control circuit is the second level, output levels of the N output ends of the second switching control circuit are all the first level, and the switches in the third switch group are turned on. That an output level of the third switching control circuit is different from an output level of the fourth switching control circuit includes: When the output levels of the output ends of the M branches of the fourth switching control circuit are all the first level, the switches in the fourth switch group are turned on, a level signal of the input end of the third switching control circuit is the first level, output levels of the M output ends of the third switching control circuit are all the second level, and the switches in the second switch group are turned off; or when the output levels of the output ends of the M branches of the fourth switching control circuit are all the second level, the switches in the fourth switch group are turned off, a level signal of the input end of the third switching control circuit is the second level, output levels of the M output ends of the third switching control circuit are all the first level, and the switches in the second switch group are turned on.

With reference to the first aspect, in some possible designs, the second switching control circuit includes N branches. The N branches of the second switching control circuit are in a one-to-one correspondence with N switches in the third switch group. An output end of each of the N branches of the second switching control circuit is connected to one corresponding switch. When output levels of the N branches of the second switching control circuit are all the first level, the switches in the third switch group are turned on; or when output levels of the N branches of the second switching control circuit are all the second level, the switches in the third switch group are turned off. The third switching control circuit includes M branches. The M branches of the third switching control circuit are in a one-to-one correspondence with M switches in the second switch group. An output end of each of the M branches of the third switching control circuit is connected to one corresponding switch. When output levels of the M branches of the third switching control circuit are all the first level, the switches in the second switch group are turned on; or when output levels of the M branches of the third switching control circuit are all the second level, the switches in the second switch group are turned off.

Circuit designs of the first switching control circuit, the second switching control circuit, the third switching control circuit, and the fourth switching control circuit are similar. The input signal of the first switching control circuit and the input signal of the second switching control circuit are set to different level signals, so that the first switch group controlled by the first switching control circuit and the third switch group controlled by the second switching control circuit are not simultaneously turned on or off. Similarly, the input signal of the fourth switching control circuit and the input signal of the third switching control circuit are set to different level signals, so that the fourth switch group controlled by the fourth switching control circuit and the second switch group controlled by the third switching control circuit are not simultaneously turned on or off. Therefore, a case in which loops are cross-connected can be avoided, safety performance is improved, and a driving safety risk is reduced.

Optionally, that an output level of the first switching control circuit is different from an output level of the second switching control circuit includes: An input end of each of the N branches of the first switching control circuit and the N branches of the second switching control circuit is connected to a pin of the MCU, different input ends are connected to different pins of the MCU, level signals received by input ends of the N branches of the first switching control circuit from the MCU are the same, level signals received by input ends of the N branches of the second switching control circuit from the MCU are the same, the level signals received by the input ends of the N branches of the first switching control circuit from the MCU are different from the level signals received by the input ends of the N branches of the second switching control circuit from the MCU, and the output level of the first switching control circuit is different from the output level of the second switching control circuit. That an output level of the third switching control circuit is different from an output level of the fourth switching control circuit includes: An input end of each of the M branches of the third switching control circuit and the M branches of the fourth switching control circuit is connected to a pin of the MCU, different input ends are connected to different pins of the MCU, level signals received by input ends of the M branches of the third switching control circuit from the MCU are the same, level signals received by input ends of the M branches of the fourth switching control circuit from the MCU are the same, the level signals received by the input ends of the M branches of the third switching control circuit from the MCU are different from the level signals received by the input ends of the M branches of the fourth switching control circuit from the MCU, and the output level of the third switching control circuit is different from the output level of the fourth switching control circuit.

With reference to the first aspect, in some possible designs, the second switching control circuit includes a first input unit, a second input unit, and N first processing units. The N first processing units are in a one-to-one correspondence with N switches in the third switch group. Each of the N first processing units is connected to one corresponding switch, and is configured to obtain a first control signal based on an output level of the first input unit and an output level of the second input unit, where the first control signal is used to control turning on or off of the corresponding switch. The first input unit includes one input end and N output ends. The input end is connected to output ends of the N branches of the first switching control circuit. The N output ends are in a one-to-one correspondence with the N first processing units. Each of the N output ends of the first input unit is connected to one corresponding first processing unit. The second input unit includes N branches. The N branches are in a one-to-one correspondence with the N first processing units. An output end of each of the N branches is connected to one corresponding first processing unit. The third switching control circuit includes a third input unit, a fourth input unit, and M second processing units. The M second processing units are in a one-to-one correspondence with M switches in the second switch group. Each of the M second processing units is connected to one corresponding switch, and is configured to obtain a second control signal based on an output level of the third input unit and an output level of the fourth input unit, where the second control signal is used to control turning on or off of the corresponding switch. The third input unit includes one input end and M output ends. The input end is connected to output ends of the M branches of the fourth switching control circuit. The M output ends are in a one-to-one correspondence with the M second processing units. Each of the M output ends of the third input unit is connected to one corresponding second processing unit. The fourth input unit includes M branches. The M branches are in a one-to-one correspondence with the M second processing units. An output end of each of the M branches is connected to one corresponding second processing unit.

Optionally, when the output levels received by each of the N first processing units from the first input unit and the second input unit are all the first level, the first control signal obtained by each first processing unit is at the first level, and is used to control the corresponding switch to be turned on; or when at least one of the output levels received by each of the N first processing units from the first input unit and the second input unit is the second level, the first control signal obtained by each first processing unit is at the second level, and is used to control the corresponding switch to be turned off. When the output levels received by each of the M second processing units from the third input unit and the fourth input unit are all the first level, the second control signal obtained by each second processing unit is at the first level, and is used to control the corresponding switch to be turned on; or when at least one of the output levels received by each of the M second processing units from the third input unit and the fourth input unit is the second level, the second control signal obtained by each second processing unit is at the second level, and is used to control the corresponding switch to be turned off.

Optionally, if a level signal received by the input end of the first input unit is the first level, output levels of the N output ends of the first input unit are all the second level; or if a level signal received by the input end of the first input unit is the second level, output levels of the N output ends of the first input unit are all the first level. If a level signal received by the input end of the third input unit is at the first level, output levels of the M output ends of the third input unit are all the second level; or if a level signal received by the input end of the third input unit is at the second level, output levels of the M output ends of the third input unit are all the first level.

Circuit designs of the first switching control circuit, the second input unit, the fourth switching control circuit, and the fourth input unit are similar. Circuit designs of the first input unit and the third input unit are similar. The output ends of the N branches of the first switching control circuit are connected to the input ends of the first input unit. In other words, output signals of the output ends of the N branches of the first switching control circuit are used as input signals of the input ends of the first input unit. Based on the output signals of the first switching control circuit, the first input unit outputs a level signal different from that of the first switching control circuit. For example, when the output signals of the branches of the first switching control circuit are all at the first level, the first input unit outputs the second level. In addition, the input signal of the first switching control circuit and the input signal of the second input unit are set to different level signals, so that the output signal of the second input unit is different from the output signal of the first switching control circuit. Then the first processing unit performs logical determining on the output signal of the first input unit and the output signal of the second input unit. When one of the output signal of the first processing unit and the output signal of the second processing unit is different from the output signal of the first switching control circuit, it can be ensured that the first switch group controlled by the first switching control circuit and the third switch group controlled by the second switching control circuit are not simultaneously turned on or off. Similarly, the output ends of the M branches of the fourth switching control circuit are connected to the input ends of the third input unit. In other words, output signals of the output ends of the M branches of the fourth switching control circuit are used as input signals of the input ends of the third input unit. Based on the output signals of the fourth switching control circuit, the third input unit outputs a level signal different from that of the fourth switching control circuit. For example, when the output signals of the branches of the fourth switching control circuit are all at the first level, the third input unit outputs the second level. In addition, the input signal of the fourth switching control circuit and the input signal of the fourth input unit are set to different level signals, so that the output signal of the fourth input unit is different from the output signal of the fourth switching control circuit. Then the second processing unit performs logical determining on the output signal of the fourth input unit and the output signal of the fourth input unit. When one of the output signal of the fourth processing unit and the output signal of the fourth processing unit is different from the output signal of the fourth switching control circuit, it can be ensured that the fourth switch group controlled by the fourth switching control circuit and the second switch group controlled by the second switching control circuit are not simultaneously turned on or off.

Optionally, an input end of each of the N branches of the first switching control circuit and the N branches of the second input unit is connected to a pin of the MCU. Different input ends are connected to different pins of the MCU. Level signals received by input ends of the N branches of the first switching control circuit from the MCU are the same. Level signals received by input ends of the N branches of the second input unit from the MCU are the same. The level signals received by the input ends of the N branches of the first switching control circuit from the MCU are different from the level signals received by the input ends of the N branches of the second input unit from the MCU. The output level of the first switching control circuit is different from the output level of the second input unit. An input end of each of the M branches of the fourth switching control circuit and the M branches of the fourth input unit is connected to a pin of the MCU. Different input ends are connected to different pins of the MCU. Level signals received by input ends of the M branches of the fourth switching control circuit from the MCU are the same. Level signals received by input ends of the M branches of the fourth input unit from the MCU are the same. The level signals received by the input ends of the M branches of the fourth switching control circuit from the MCU are different from the level signals received by the input ends of the M branches of the fourth input unit from the MCU. The output level of the fourth switching control circuit is different from the output level of the fourth input unit.

With reference to the first aspect, in some possible designs, N = M.

Optionally, N = M = 3.

With reference to the first aspect, in some possible designs, the first steering control assembly includes a first control circuit and a first switching circuit. The first switching circuit includes the first switch group and the second switch group. The first control circuit is configured to: provide the drive current for the first motor assembly when the first switch group is turned on, and provide the drive current for the second motor assembly when the second switch group is turned on. The second steering control assembly includes a second control circuit and a second switching circuit. The second switching circuit includes the third switch group and the fourth switch group. The second control circuit is configured to: provide the drive current for the first motor assembly when the third switch group is turned on, and provide the drive current for the second motor assembly when the fourth switch group is turned on.

According to a second aspect, this application provides a steering system. The system includes the steering control apparatus according to any one of the first aspect and the possible implementations of the first aspect, a power battery, and a steering execution apparatus. The steering control apparatus is connected to the power battery and the steering execution apparatus. The power battery is used to supply electric energy to the steering control apparatus. The steering control apparatus is configured to generate a steering signal. The steering execution apparatus is configured to control steering of a vehicle based on the steering signal.

According to a third aspect, this application provides a vehicle. The vehicle includes the steering system according to the second aspect.

It should be understood that the second aspect and the third aspect of this application correspond to the technical solutions of the first aspect of this application, and beneficial effects achieved by the aspects and the corresponding feasible implementations are similar. Details are not described again.

### BRIEF DESCRIPTION OF DRAWINGS

FIG. 1 is a diagram of a steering system;
FIG. 2 is a diagram of a steering system according to an embodiment of this application;
FIG. 3 is a block diagram of a steering control apparatus according to an embodiment of this application;
FIG. 4 is another block diagram of a steering control apparatus according to an embodiment of this application;
FIG. 5 is a circuit diagram of a steering control apparatus according to an embodiment of this application;
FIG. 6 is a circuit diagram of a branch according to an embodiment of this application;
FIG. 7 is a circuit diagram of a circuit module according to an embodiment of this application;
FIG. 8 is another circuit diagram of a steering control apparatus according to an embodiment of this application;
FIG. 9 is still another circuit diagram of a steering control apparatus according to an embodiment of this application;
FIG. 10 is yet another circuit diagram of a steering control apparatus according to an embodiment of this application; and
FIG. 11 is another diagram of a steering system according to an embodiment of this application.

### DESCRIPTION OF EMBODIMENTS

The following describes technical solutions of this application with reference to accompanying drawings.

To clearly describe the technical solutions in embodiments of this application, the following descriptions are first provided.

First, in embodiments of this application, words such as "first" and "second" are used to distinguish between same items or similar items having basically same functions and effects. For example, a first steering control assembly and a second steering control assembly are used to distinguish different steering control assemblies. A first switching control assembly and a second switching control assembly are used to distinguish different switching control assemblies. A first motor assembly and a second motor assembly are used to distinguish different motor assemblies. A first switch group, a second switch group, a third switch group, and a fourth switch group are used to distinguish between different switch groups. A sequence is not limited. A person skilled in the art may understand that the words such as "first" and "second" limit neither of a quantity and an execution sequence, and the words such as "first" and "second" do not indicate a definite difference either.

Second, in embodiments of this application, "at least one type (piece)" means one or more types (pieces). The term "and/or" describes an association relationship between associated objects and may indicate three relationships. For example, A and/or B may indicate the following cases: Only A exists, both A and B exist, and only B exists. A and B may be singular or plural. The character "/" usually indicates an "or" relationship between associated objects, but does not exclude an "and" relationship between the associated objects. A specific meaning represented by the character "/" may be understood with reference to the context.

Third, in embodiments of this application, the terms "include", "contain", and any other variant thereof are intended to cover a non-exclusive inclusion. For example, an apparatus, system, product, or device that includes a series of assemblies, modules, or units is not necessarily limited to those assemblies, modules, or units that are clearly listed, but may include other assemblies, modules, or units that are not explicitly listed or are inherent to such an apparatus, system, product, or device.

It should be noted that a switch in embodiments of this application may be one or more of a plurality of switch devices such as a relay, a metal-oxide semiconductor field-effect transistor (metal-oxide semiconductor field-effect transistor, MOSFET), a bipolar junction transistor (bipolar junction transistor, BJT), an insulated gate bipolar transistor (insulated gate bipolar transistor, IGBT), a gallium nitride field-effect transistor (gallium nitride field-effect transistor, GaNFET), and a silicon carbide (SiC) power transistor. The switch devices are not listed one by one in embodiments of this application. Each switch device may include a first electrode, a second electrode, and a control electrode, where the control electrode is configured to control turning on or off of the switch device. When the switch device is turned on, a current can be transmitted between the first electrode and the second electrode of the switch device. When the switch device is turned off, a current cannot be transmitted between the first electrode and the second electrode of the switch device. An MOSFET is used as an example. The control electrode of the switch device is a gate electrode, the first electrode of the switch device may be a source electrode of the switch device, and the second electrode may be a drain electrode of the switch device. Alternatively, the first electrode may be the drain electrode of the switch device, and the second electrode may be the source electrode of the switch device.

It should be further noted that, in embodiments of this application, the motor assembly may alternatively be referred to as a motor. This is not limited in this application.

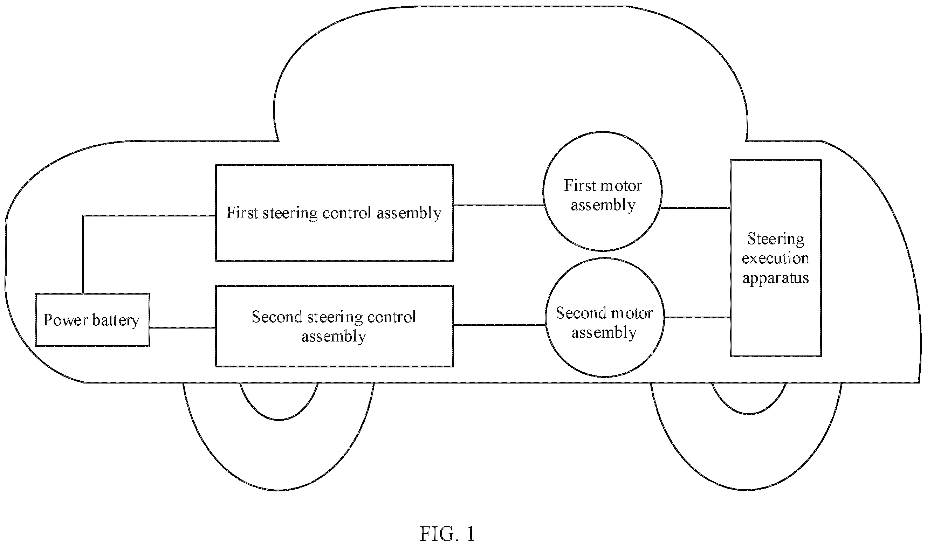

A function of a steering system of a vehicle is to control a driving direction of the vehicle according to an instruction of a driver or an instruction of an autonomous driving system. The steering system is critical to driving safety of the vehicle. Currently, a known steering system is shown in FIG. 1. The steering system shown in FIG. 1 includes two steering control assemblies. Each of the two steering control assemblies is connected to one motor assembly. The steering control assembly may drive the connected motor assembly. When either of the two steering control assemblies is faulty, the steering control assembly that is not faulty may drive the motor assembly connected to the steering control assembly. However, when one steering control assembly is faulty, only one motor assembly performs a steering operation. In this case, a steering effect is unstable, and a specific driving safety risk exists.

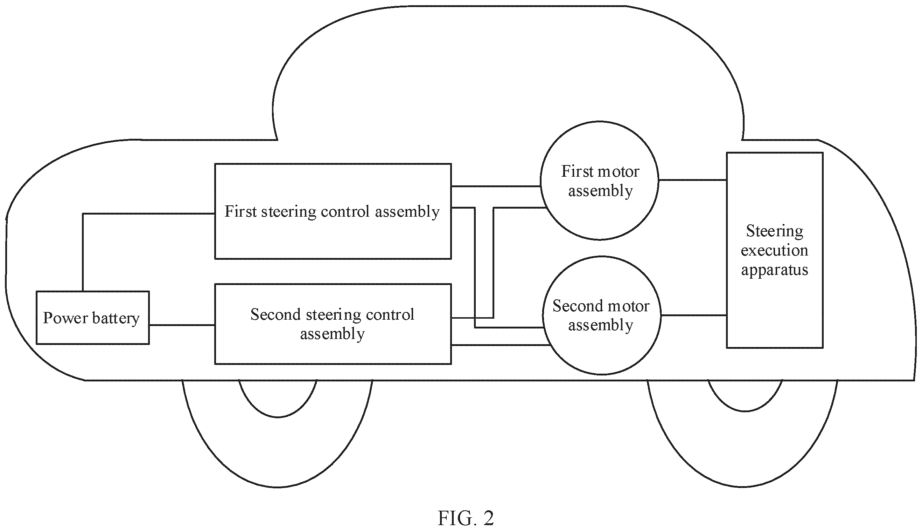

To resolve the foregoing problem, embodiments of this application provide a steering control apparatus, a steering system, and a vehicle. As shown in FIG. 2, two steering control assemblies are respectively connected to two motor assemblies. When one of the steering control assemblies is faulty, the steering control assembly that is not faulty may independently drive the two motor assemblies simultaneously, to ensure stability of a steering effect. Different switch groups connected to a same motor assembly are separately controlled through different switching control circuits, so that the different switch groups connected to the same motor assembly are not simultaneously turned on or off. Therefore, a case in which loops are cross-connected is avoided, safety performance is improved, and a driving safety risk is reduced.

To better understand the steering control apparatus, the steering control system, and the vehicle provided in the embodiments of this application, the following describes the technical solutions in this application with reference to the accompanying drawings.

An embodiment of this application provides a steering control apparatus. The steering control apparatus may include: a first steering control assembly, a second steering control assembly, a first switching control assembly, a second switching control assembly, a first motor assembly, and a second motor assembly. The first steering control assembly includes a first switch group connected to the first motor assembly and a second switch group connected to the second motor assembly, and is configured to: provide a drive current for the first motor assembly when the first switch group is turned on, and provide a drive current for the second motor assembly when the second switch group is turned on. The second steering control assembly includes a third switch group connected to the first motor assembly and a fourth switch group connected to the second motor assembly, and is configured to: provide a drive current for the first motor assembly when the third switch group is turned on, and provide a drive current for the second motor assembly when the fourth switch group is turned on. The first switching control assembly includes a first switching control circuit configured to control the first switch group and a second switching control circuit configured to control the third switch group. An output level of the first switching control circuit is different from an output level of the second switching control circuit. The second switching control assembly includes a third switching control circuit configured to control the second switch group and a fourth switching control circuit configured to control the fourth switch group. An output level of the third switching control circuit is different from an output level of the fourth switching control circuit.

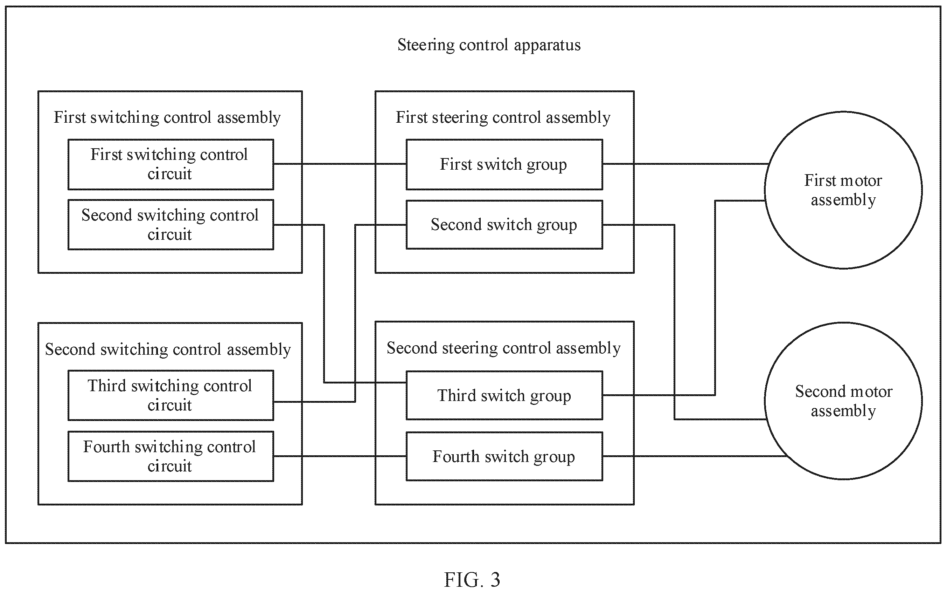

FIG. 3 is a block diagram of a steering control apparatus according to an embodiment of this application. As shown in FIG. 3, the steering control apparatus includes a first steering control assembly, a second steering control assembly, a first switching control assembly, a second switching control assembly, a first motor assembly, and a second motor assembly.

The first steering control assembly includes a first switch group and a second switch group. The first switch group is connected to the first motor assembly, and the second switch group is connected to the second motor assembly. The first steering control assembly is configured to: provide a drive current for the first motor assembly when the first switch group is turned on, and provide a drive current for the second motor assembly when the second switch group is turned on.

The second steering control assembly includes a third switch group and a fourth switch group. The third switch group is connected to the first motor assembly, and the fourth switch group is connected to the second motor assembly. The second steering control assembly is configured to: provide a drive current for the first motor assembly when the third switch group is turned on, and provide a drive current for the second motor assembly when the fourth switch group is turned on.

The first switching control assembly includes a first switching control circuit and a second switching control circuit. The first switching control circuit is connected to the first switch group, and the first switching control circuit is configured to control the first switch group. The second switching control circuit is connected to the third switch group, and the second switching control circuit is configured to control the third switch group. An output level of the first switching control circuit is different from an output level of the second switching control circuit, so that the first switch group and the third switch group are not simultaneously turned on or off.

The second switching control assembly includes a third switching control circuit and a fourth switching control circuit. The third switching control circuit is connected to the second switch group, and the third switching control circuit is configured to control the second switch group. The fourth switching control circuit is connected to the fourth switch group, and the fourth switching control circuit is configured to control the fourth switch group. An output level of the third switching control circuit is different from an output level of the fourth switching control circuit, so that the second switch group and the fourth switch group are not simultaneously turned on or off.

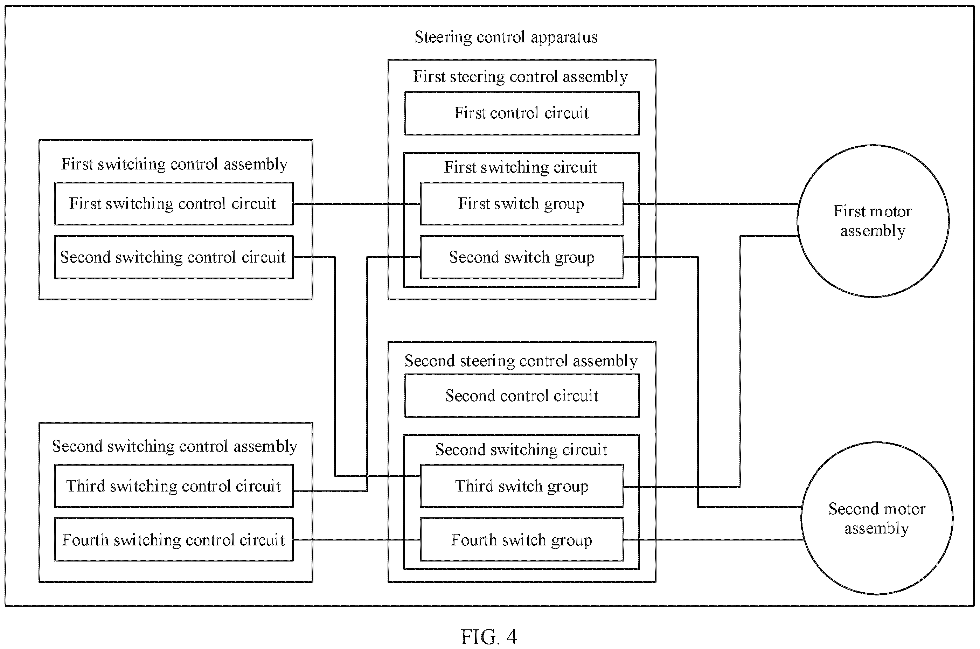

FIG. 4 is another block diagram of a steering control apparatus according to an embodiment of this application.

Optionally, as shown in FIG. 4, a first steering control assembly may include a first control circuit and a first switching circuit. The first switching circuit includes a first switch group and a second switch group. The first control circuit is configured to: provide a drive current for a first motor assembly when the first switch group is turned on, and provide a drive current for a second motor assembly when the second switch group is turned on. The second steering control assembly may include a second control circuit and a second switching circuit. The second switching circuit includes a third switch group and a fourth switch group. The second control circuit is configured to: provide a drive current for the first motor assembly when the third switch group is turned on, and provide a drive current for the second motor assembly when the fourth switch group is turned on.

In a possible design, the first motor assembly includes N armature windings, and the second motor assembly includes M armature windings, where N and M are positive integers. A quantity of switches in the first switch group and a quantity of switches in the third switch group are the same as a quantity of armature windings included in the first motor assembly. A quantity of switches in the second switch group and a quantity of switches in the fourth switch group are the same as a quantity of armature windings included in the second motor assembly.

Optionally, in the foregoing design, N = M.

It should be understood that, in an actual application scenario, N may be equal to M, or N may not be equal to M.

Currently, a commonly used motor assembly includes a motor including one armature winding and a motor including three armature windings. In embodiments of this application, an example in which both the first motor assembly and the second motor assembly are a motor assembly including three armature windings is described. This should not impose any limitation on embodiments of this application.

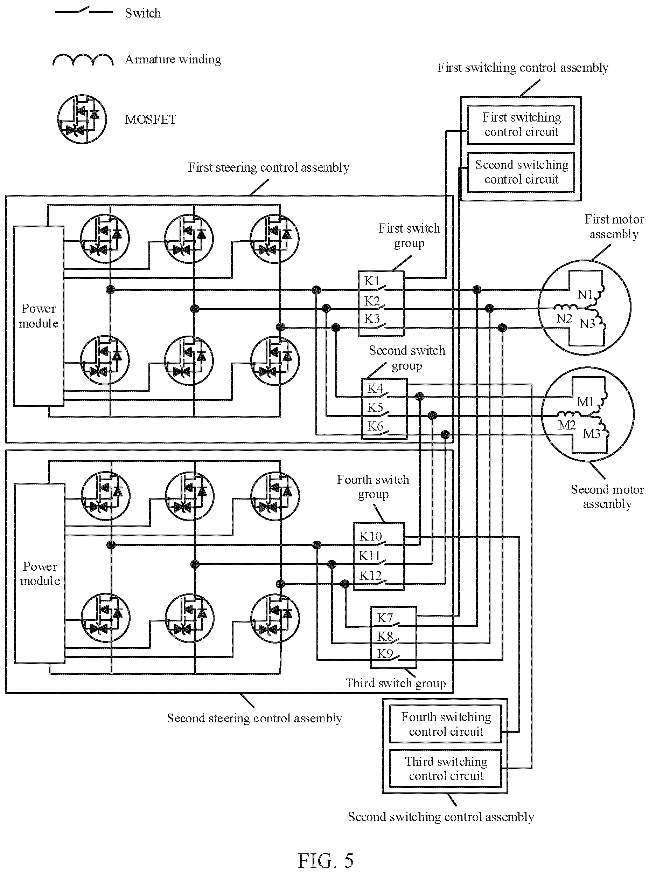

FIG. 5 is a circuit diagram of a steering control apparatus according to an embodiment of this application. As shown in FIG. 5, a first motor assembly includes three armature windings: N1, N2, and N3, and a second motor assembly includes three armature windings: M1, M2, and M3. A quantity of switches in a first switch group and a quantity of switches in a third switch group are the same as a quantity of armature windings included in the first motor assembly, and a quantity of switches in a second switch group and a quantity of switches in a fourth switch group are the same as a quantity of armature windings included in the second motor assembly. The first switch group includes three switches: K1, K2, and K3, the second switch group includes three switches: K4, K5, and K6, the third switch group includes three switches: K7, K8, and K9, and the fourth switch group includes three switches: K10, K11, and K12.

It should be understood that FIG. 5 is merely an example, and components (such as a switch, an armature winding, and an MOSFET) in the figure are merely examples, and should not constitute any limitation on this application.

In a possible design, a first switching control circuit may include N branches. The N branches are in a one-to-one correspondence with N switches in the first switch group. An output end of each of the N branches is connected to one corresponding switch. When output levels of the N branches are all a first level, the switches in the first switch group are turned on; or when output levels of the N branches are all a second level, the switches in the first switch group are turned off. A fourth switching control circuit may include M branches. The M branches are in a one-to-one correspondence with M switches in the fourth switch group. An output end of each of the M branches is connected to one corresponding switch. When output levels of the M branches are all the first level, the switches in the fourth switch group are turned on; or when output levels of the M branches are all the second level, the switches in the fourth switch group are turned off.

In the foregoing design, an input end of each branch is connected to a switch, and each branch is configured to control turning on or off of the connected switch. The first level may be a high level, and the second level may be a low level; or the first level may be a low level, and the second level may be a high level. This is not limited in embodiments of this application.

For example, refer to the first switch group and the fourth switch group shown in FIG. 5. The first switching control circuit may include three branches. The three branches are in a one-to-one correspondence with K1, K2, and K3 in the first switch group. An output end of each of the three branches is connected to one corresponding switch. When output levels of the three branches are all high levels, K1, K2, and K3 in the first switch group are turned on; or when output levels of the three branches are all low levels, K1, K2, and K3 in the first switch group are turned off. Alternatively, when output levels of the three branches are all low levels, K1, K2, and K3 in the first switch group are turned on; or when output levels of the three branches are all high levels, K 1, K2, and K3 in the first switch group are turned off. The fourth switching control circuit may include three branches. The three branches are in a one-to-one correspondence with K10, K 11, and K12 in the fourth switch group. An output end of each of the M branches is connected to one corresponding switch. When output levels of the three branches are all high levels, K10, K11, and K12 in the fourth switch group are turned on; or when output levels of the three branches are all low levels, K10, K11, and K12 in the fourth switch group are turned off. Alternatively, when output levels of the three branches are all low levels, K10, K11, and K12 in the fourth switch group are turned on; or when output levels of the three branches are all high levels, K10, K11, and K12 in the fourth switch group are turned off.

Optionally, in the foregoing design, each of the N branches includes one or more input ends, and each input end is configured to receive one level signal. Each of the M branches includes one or more input ends, and each input end is configured to receive one level signal.

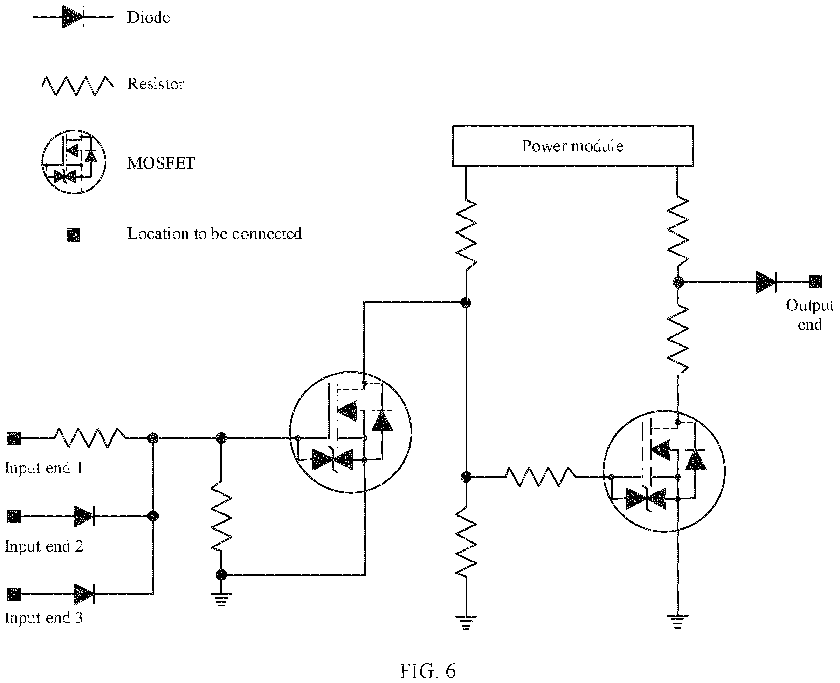

FIG. 6 is a circuit diagram of a branch according to an embodiment of this application. Each of the N branches of the first switching control circuit and each of the M branches of the fourth switching control circuit may be shown in FIG. 6. Each of the N branches of the first switching control circuit and each of the M branches of the fourth switching control circuit may include one or more input ends, and each input end may be configured to receive one level signal. For example, an input end 1, an input end 2, and an input end 3 are shown in FIG. 6.

It should be understood that FIG. 6 is merely an example, and components (such as a diode, a resistor, and an MOSFET) in the figure are merely examples, and should not constitute any limitation on this application.

Optionally, the level signal received by the one or more input ends may include a level signal output by an MCU.

For example, in the three input ends shown in FIG. 6, at least one input end may be configured to receive the level signal output by the MCU. A specific input end configured to receive the level signal output by the MCU is not limited in embodiments of this application.

Optionally, the level signal received by the one or more input ends may further include a level signal output by a power management chip and/or a level signal output by a drive chip.

For example, in the three input ends shown in FIG. 6, at least one input end may be configured to receive the level signal output by the power management chip, and/or at least one input end may be configured to receive the level signal output by the drive chip. A specific input end configured to receive the level signal output by the power management chip is not limited in embodiments of this application, and a specific input end configured to receive the level signal output by the drive chip is not limited either.

For example, in the branch shown in FIG. 6, the input end 1 may be configured to receive the level signal output by the power management chip, the input end 2 may be configured to receive the level signal output by the drive chip, and the input end 3 may be configured to receive the level signal output by the MCU. This is not limited in embodiments of this application.

Optionally, a level signal received by each of the N branches includes a plurality of level signals. When at least one of the plurality of level signals is at the second level, an output level of each of the N branches is the second level; or when each of the plurality of level signals is at the first level, an output level of each of the N branches is the first level. A level signal received by each of the M branches includes a plurality of level signals. When at least one of the plurality of level signals is at the second level, an output level of each of the M branches is the second level; or when each of the plurality of level signals is at the first level, an output level of each of the M branches is the first level.

For example, as shown in FIG. 6, the level signal received by each of the N branches and the M branches may include a plurality of level signals. For example, the level signal received by each of the N branches and the M branches includes three level signals, the input end 1 may be configured to receive the level signal output by the power management chip, the input end 2 may be configured to receive the level signal output by the drive chip, and the input end 3 may be configured to receive the level signal output by the MCU. Alternatively, the input end 1 may be configured to receive the level signal output by the MCU, the input end 2 may be configured to receive the level signal output by the power management chip, and the input end 3 may be configured to receive the level signal output by the drive chip. Alternatively, the input end 1 may be configured to receive the level signal output by the drive chip, the input end 2 may be configured to receive the level signal output by the MCU, and the input end 3 may be configured to receive the level signal output by the power management chip. This is not limited in this application. Certainly, in some possible designs, the three input ends may alternatively be configured to receive another level signal, provided that the three input ends can be configured to control turning on or off of the switch.

In a case in which MOSFETs shown in the branch shown in FIG. 6 are N-type MOSFETs, when at least one of the level signals received by the input end 1, the input end 2, and the input end 3 of each of the N branches is at a low level, the output level of each of the N branches is at a low level; or when each of the level signals received by the input end 1, the input end 2, and the input end 3 is at a high level, the output level of each of the N branches is a high level. Similarly, when at least one of the level signals received by the input end 1, the input end 2, and the input end 3 of each of the M branches is at a low level, the output level of each of the M branches is a low level; or when each of the level signals received by the input end 1, the input end 2, and the input end 3 is at a high level, the output level of each of the M branches is a high level.

It should be noted that, in a case in which an MOSFET close to the input end shown in the branch shown in FIG. 6 is a P-type MOSFET, and an MOSFET close to the output end is an N-type MOSFET, when at least one of the level signals received by the input end 1, the input end 2, and the input end 3 of each of the N branches is at a high level, the output level of each of the N branches is a low level; or when each of the level signals received by the input end 1, the input end 2, and the input end 3 is at a low level, the output level of each of the N branches is a high level. Similarly, when at least one of the level signals received by the input end 1, the input end 2, and the input end 3 of each of the M branches is at a high level, the output level of each of the M branches is a low level; or when each of the level signals received by the input end 1, the input end 2, and the input end 3 is at a low level, the output level of each of the M branches is a high level.

Based on designs of the first switching control circuit and the fourth switching control circuit, the following several possible designs are further made for a second switching control circuit and a third switching control circuit.

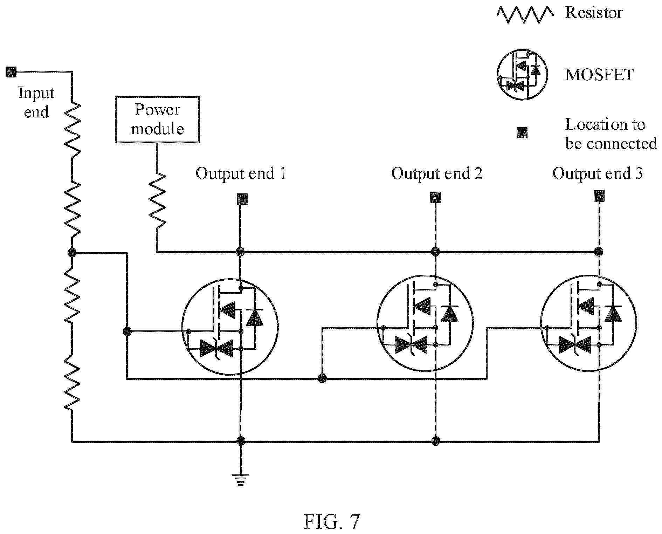

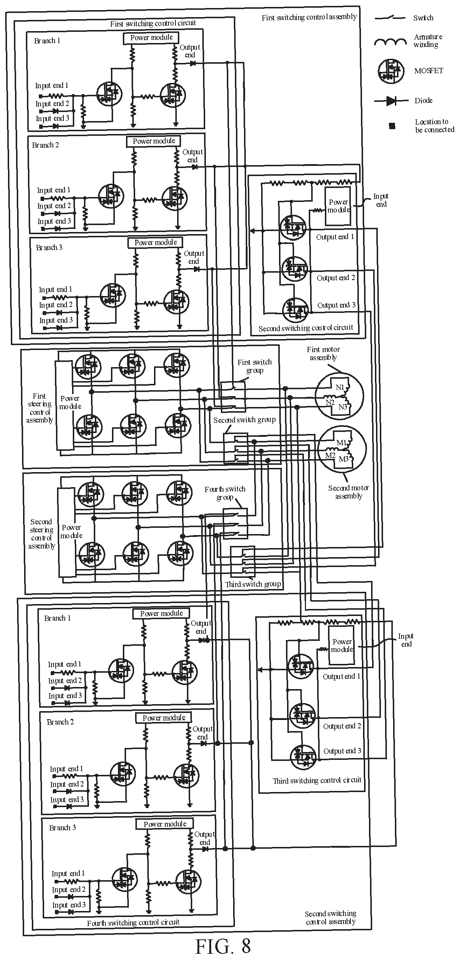

In a design A, the second switching control circuit includes one input end and N output ends. The input end is connected to output ends of the N branches of the first switching control circuit. The N output ends are in a one-to-one correspondence with N switches in the third switch group. Each of the N output ends is connected to one corresponding switch. When output levels of the N output ends are all the first level, the switches in the third switch group are turned on; or when output levels of the N output ends are all the second level, the switches in the third switch group are turned off. The third switching control circuit includes one input end and M output ends. The input end is connected to output ends of the M branches of the fourth switching control circuit. The M output ends are in a one-to-one correspondence with M switches in the second switch group. Each of the M output ends is connected to one corresponding switch. When output levels of the M output ends are all the first level, the switches in the second switch group are turned on; or when output levels of the M output ends are all the second level, the switches in the second switch group are turned off. On this basis, the circuit design of the steering control apparatus is implemented. For details, refer to the following related descriptions with reference to FIG. 7 and FIG. 8.

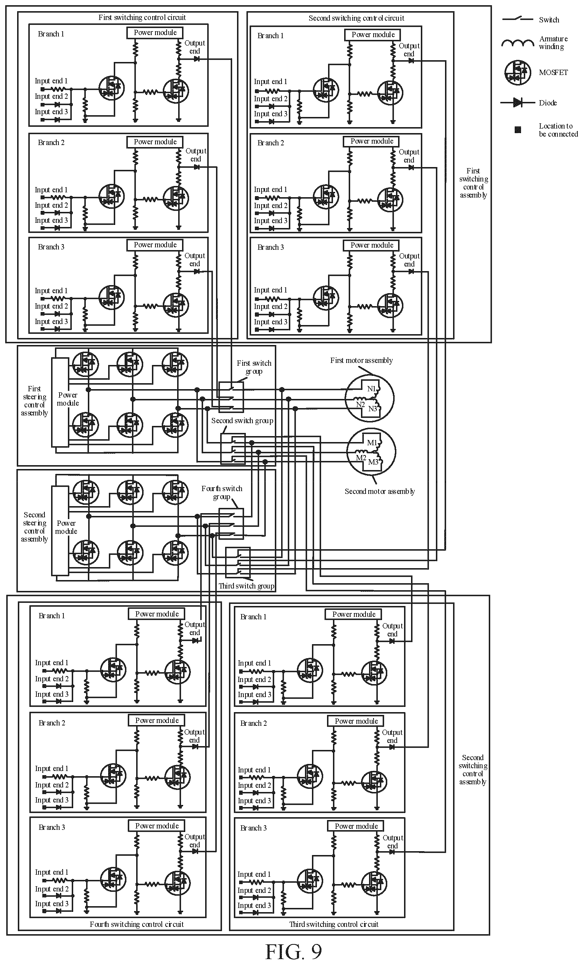

In a design B, the second switching control circuit includes N branches. The N branches of the second switching control circuit are in a one-to-one correspondence with N switches in the third switch group. An output end of each of the N branches of the second switching control circuit is connected to one corresponding switch. When output levels of the N branches of the second switching control circuit are all the first level, the switches in the third switch group are turned on; or when output levels of the N branches of the second switching control circuit are all the second level, the switches in the third switch group are turned off. The third switching control circuit includes M branches. The M branches of the third switching control circuit are in a one-to-one correspondence with M switches in the second switch group. An output end of each of the M branches of the third switching control circuit is connected to one corresponding switch. When output levels of the M branches of the third switching control circuit are all the first level, the switches in the second switch group are turned on; or when output levels of the M branches of the third switching control circuit are all the second level, the switches in the second switch group are turned off. On this basis, the circuit design of the steering control apparatus is implemented. For details, refer to the following related descriptions with reference to FIG. 6 and FIG. 9.

In a design C, the second switching control circuit includes a first input unit, a second input unit, and N first processing units. The N first processing units are in a one-to-one correspondence with N switches in the third switch group. Each of the N first processing units is connected to one corresponding switch, and is configured to obtain a first control signal based on an output level of the first input unit and an output level of the second input unit, where the first control signal is used to control turning on or off of the corresponding switch. The first input unit includes one input end and N output ends. The input end is connected to output ends of the N branches of the first switching control circuit. The N output ends are in a one-to-one correspondence with the N first processing units. Each of the N output ends of the first input unit is connected to one corresponding first processing unit. The second input unit includes N branches. The N branches are in a one-to-one correspondence with the N first processing units. An output end of each of the N branches is connected to one corresponding first processing unit. The third switching control circuit includes a third input unit, a fourth input unit, and M second processing units. The M second processing units are in a one-to-one correspondence with M switches in the second switch group. Each of the M second processing units is connected to one corresponding switch, and is configured to obtain a second control signal based on an output level of the third input unit and an output level of the fourth input unit, where the second control signal is used to control turning on or off of the corresponding switch. The third input unit includes one input end and M output ends. The input end is connected to output ends of the M branches of the fourth switching control circuit. The M output ends are in a one-to-one correspondence with the M second processing units. Each of the M output ends of the third input unit is connected to one corresponding second processing unit. The fourth input unit includes M branches. The M branches are in a one-to-one correspondence with the M second processing units. An output end of each of the M branches is connected to one corresponding second processing unit. On this basis, the circuit design of the steering control apparatus is implemented. For details, refer to the following related descriptions with reference to FIG. 6, FIG. 7, and FIG. 10.

The following describes the three designs in detail with reference to the accompanying drawings.

### Design A

FIG. 7 is a circuit diagram of a circuit module according to an embodiment of this application. The circuit module includes one input end and three output ends (an output end 1, an output end 2, and an output end 3 shown in FIG. 7).

It should be understood that FIG. 7 is merely an example, and components (such as a resistor and an MOSFET) in the figure are merely examples, and should not constitute any limitation on this application.

In the design A, the second switching control circuit and the third switching control circuit may be shown in FIG. 7. For example, N = M = 3. The second switching control circuit may include one input end and three output ends. For example, the input end is connected to output ends of the three branches of the first switching control circuit, and the three output ends are in a one-to-one correspondence with K7, K8, and K9 in the third switch group shown in FIG. 5. Each of the three output ends is connected to one corresponding switch.

Similarly, the third switching control circuit may include one input end and three output ends. The input end is connected to output ends of the three branches of the fourth switching control circuit, and the three output ends are in a one-to-one correspondence with K4, K5, and K6 in the second switch group shown in FIG. 5. Each of the three output ends is connected to one corresponding switch.

When the output levels of the three output ends of the second switching control circuit are high levels, K7, K8, and K9 in the third switch group are turned on; or when the output levels of the three output ends of the second switching control circuit are low levels, K7, K8, and K9 in the third switch group are turned off. When the output levels of the three output ends of the third switching control circuit are high levels, K4, K5, and K6 in the second switch group are turned on; or when the output levels of the three output ends of the third switching control circuit are low levels, K4, K5, and K6 in the second switch group are turned off. Alternatively, when the output levels of the three output ends of the second switching control circuit are low levels, K7, K8, and K9 in the third switch group are turned on; or when the output levels of the three output ends of the second switching control circuit are high levels, K7, K8, and K9 in the third switch group are turned off. When the output levels of the three output ends of the third switching control circuit are low levels, K4, K5, and K6 in the second switch group are turned on; or when the output levels of the three output ends of the third switching control circuit are high levels, K4, K5, and K6 in the second switch group are turned off.

Based on the design A, optionally, that an output level of the first switching control circuit is different from an output level of the second switching control circuit may include: When the output levels of the output ends of the N branches of the first switching control circuit are all the first level, the switches in the first switch group are turned on, a level signal of the input end of the second switching control circuit is the first level, output levels of the N output ends of the second switching control circuit are all the second level, and the switches in the third switch group are turned off; or when the output levels of the output ends of the N branches of the first switching control circuit are all the second level, the switches in the first switch group are turned off, a level signal of the input end of the second switching control circuit is the second level, output levels of the N output ends of the second switching control circuit are all the first level, and the switches in the third switch group are turned on. That an output level of the third switching control circuit is different from an output level of the fourth switching control circuit may include: When the output levels of the output ends of the M branches of the fourth switching control circuit are all the first level, the switches in the fourth switch group are turned on, a level signal of the input end of the third switching control circuit is the first level, output levels of the M output ends of the third switching control circuit are all the second level, and the switches in the second switch group are turned off; or when the output levels of the output ends of the M branches of the fourth switching control circuit are all the second level, the switches in the fourth switch group are turned off, a level signal of the input end of the third switching control circuit is the second level, output levels of the M output ends of the third switching control circuit are all the first level, and the switches in the second switch group are turned on.

For example, each of the N branches of the first switching control circuit and each of the M branches of the fourth switching control circuit may be the branch shown in FIG. 6, and the second switching control circuit and the third switching control circuit may be the circuit module shown in FIG. 7.

FIG. 8 is another circuit diagram of a steering control apparatus according to an embodiment of this application.

For example, N = M = 3. As shown in FIG. 8, in a case in which MOSFETs in the first switching control circuit, the second switching control circuit, the third switching control circuit, and the fourth switching control circuit shown in FIG. 8 are all N-type MOSFETs, when output levels of output ends of a branch 1, a branch 2, and a branch 3 of the first switching control circuit are all high levels, switches in the first switch group are turned on, a level signal of the input end of the second switching control circuit is a high level, output levels of the three output ends of the second switching control circuit are all low levels, and switches in the third switch group are turned off; or when output levels of output ends of a branch 1, a branch 2, and a branch 3 of the first switching control circuit are all low levels, switches in the first switch group are turned off, a level signal of the input end of the second switching control circuit is a low level, output levels of the three output ends of the second switching control circuit are all high levels, and switches in the third switch group are turned on.

Similarly, that an output level of the third switching control circuit is different from an output level of the fourth switching control circuit may include: When output levels of output ends of a branch 1, a branch 2, and a branch 3 of the fourth switching control circuit are all high levels, switches in the fourth switch group are turned on, a level signal of the input end of the third switching control circuit is a high level, output levels of the three output ends of the third switching control circuit are all low levels, and switches in the second switch group are turned off; or when output levels of output ends of a branch 1, a branch 2, and a branch 3 of the fourth switching control circuit are all low levels, switches in the fourth switch group are turned off, a level signal of the input end of the third switching control circuit is a low level, output levels of the three output ends of the third switching control circuit are all high levels, and switches in the second switch group are turned on.

It should be noted that, in a case in which MOSFETs close to the input ends in the branches of the first switching control circuit and the input ends in the branches of the fourth switching control circuit shown in FIG. 8 are all P-type MOSFETs, and MOSFETs close to the output ends are all N-type MOSFETs (MOSFETs in the second switching control circuit and the third switching control circuit are not limited, and N-type MOSFETs or P-type MOSFETs may be used), when the output levels of the output ends of the branch 1, the branch 2, and the branch 3 of the first switching control circuit are all high levels, the switches in the first switch group are turned on, the level signal of the input end of the second switching control circuit is a high level, the output levels of the three output ends of the second switching control circuit are all low levels, and the switches in the third switch group are turned off; or when the output levels of the output ends of the branch 1, the branch 2, and the branch 3 of the first switching control circuit are all low levels, the switches in the first switch group are turned off, the level signal of the input end of the second switching control circuit is a low level, the output levels of the three output ends of the second switching control circuit are all high levels, and the switches in the third switch group are turned on. Similarly, that an output level of the third switching control circuit is different from an output level of the fourth switching control circuit may include: When output levels of output ends of a branch 1, a branch 2, and a branch 3 of the fourth switching control circuit are all high levels, switches in the fourth switch group are turned on, a level signal of the input end of the third switching control circuit is a high level, output levels of the three output ends of the third switching control circuit are all low levels, and switches in the second switch group are turned off; or when output levels of output ends of a branch 1, a branch 2, and a branch 3 of the fourth switching control circuit are all low levels, switches in the fourth switch group are turned off, a level signal of the input end of the third switching control circuit is a low level, output levels of the three output ends of the third switching control circuit are all high levels, and switches in the second switch group are turned on.

It should be further noted that, a case in which MOSFETs close to the input ends in the branches of the first switching control circuit and the input ends in the branches of the fourth switching control circuit shown in FIG. 8 are all P-type MOSFETs, and MOSFETs close to the output ends are all N-type MOSFETs (MOSFETs in the second switching control circuit and the third switching control circuit are not limited, and N-type MOSFETs or P-type MOSFETs may be used) is compared with a case in which MOSFETs are all N-type MOSFETs. In the case in which MOSFETs are all N-type MOSFETs, when the three input ends of the first switching control circuit are all at high levels, the output levels of the output ends of the three branches of the first switching control circuit are all high levels. In the case in which MOSFETs close to the input ends in the branches of the first switching control circuit are P-type MOSFETs, when the three input ends of the first switching control circuit are at low levels, the output levels of the output ends of the three branches of the first switching control circuit are all high levels.

Similarly, in the case in which MOSFETs are all N-type MOSFETs, when the three input ends of the fourth switching control circuit are at high levels, the output levels of the output ends of the three branches of the fourth switching control circuit are all high levels. In the case in which MOSFETs close to the input ends in the branches of the fourth switching control circuit are all P-type MOSFETs, and MOSFETs close to the output ends are all N-type MOSFETs (MOSFETs in the second switching control circuit and the third switching control circuit are not limited, and N-type MOSFETs or P-type MOSFETs may be used), when the three input ends of the fourth switching control circuit are at low levels, the output levels of the output ends of the three branches of the fourth switching control circuit are high levels.

Based on the foregoing design, the output ends of the N branches of the first switching control circuit are connected to the input ends of the second switching control circuit. In other words, output signals of the output ends of the N branches of the first switching control circuit are used as input signals of the input ends of the second switching control circuit. Based on the output signals of the first switching control circuit, the second switching circuit outputs a level signal different from that of the first switching control circuit. For example, when the output signals of the branches of the first switching control circuit are all at the first level, the second switching control circuit outputs the second level, so that the third switch group is turned off when the first switch group is turned on or the third switch group is turned on when the first switch group is turned off. Similarly, the output ends of the M branches of the fourth switching control circuit are connected to the input ends of the third switching control circuit. In other words, output signals of the output ends of the M branches of the fourth switching control circuit are used as input signals of the input ends of the third switching control circuit. Based on the output signals of the fourth switching control circuit, the third switching circuit outputs a level signal different from that of the fourth switching control circuit. For example, when the output signals of branches of the fourth switching control circuit are all at the first level, the third switching control circuit outputs the second level, so that the second switch group is turned off when the fourth switch group is turned on, or the second switch group is turned on when the fourth switch group is turned off. Therefore, a case in which loops are cross-connected can be avoided, safety performance is improved, and a driving safety risk is reduced.

### Design B

In the design B, each of the N branches of the first switching control circuit, each of the N branches of the second switching control circuit, each of the M branches of the third switching control circuit and each of the M branches of the fourth switching control circuit may be the branch shown in FIG. 6.

FIG. 9 is still another circuit diagram of a steering control apparatus according to an embodiment of this application.

For example, N = M = 3. As shown in FIG. 9, the second switching control circuit may include a branch 1, a branch 2, and a branch 3. The branch 1, the branch 2, and the branch 3 of the second switching control circuit are in a one-to-one correspondence with three switches in the third switch group. An output end of each of the three branches of the second switching control circuit is connected to one corresponding switch. When output levels of the three branches of the second switching control circuit are all high levels, the switches in the third switch group are turned on; or when output levels of the three branches of the second switching control circuit are all low levels, the switches in the third switch group are turned off.

Similarly, the third switching control circuit includes a branch 1, a branch 2, and a branch 3. The three branches of the third switching control circuit are in a one-to-one correspondence with three switches in the second switch group. An output end of each of the three branches of the third switching control circuit is connected to one corresponding switch. When output levels of the three branches of the third switching control circuit are all high levels, the switches in the second switch group are turned on; or when output levels of the three branches of the third switching control circuit are all low levels, the switches in the second switch group are turned off.

Optionally, in the foregoing circuit design, when the output levels of the three branches of the second switching control circuit are all low levels, the switches in the third switch group are turned on; or when the output levels of the three branches of the second switching control circuit are all high levels, the switches in the third switch group are turned off. Similarly, when the output levels of the three branches of the third switching control circuit are all low levels, the switches in the second switch group are turned on; or when the output levels of the three branches of the third switching control circuit are all high levels, the switches in the second switch group are turned off. This is not limited in this application.

Based on the design B, optionally, that an output level of the first switching control circuit is different from an output level of the second switching control circuit may include: An input end of each of the N branches of the first switching control circuit and the N branches of the second switching control circuit is connected to a pin of the MCU, different input ends are connected to different pins of the MCU, level signals received by input ends of the N branches of the first switching control circuit from the MCU are the same, level signals received by input ends of the N branches of the second switching control circuit from the MCU are the same, the level signals received by the input ends of the N branches of the first switching control circuit from the MCU are different from the level signals received by the input ends of the N branches of the second switching control circuit from the MCU, and the output level of the first switching control circuit is different from the output level of the second switching control circuit. That an output level of the third switching control circuit is different from an output level of the fourth switching control circuit may include: An input end of each of the M branches of the third switching control circuit and the M branches of the fourth switching control circuit is connected to a pin of the MCU, different input ends are connected to different pins of the MCU, level signals received by input ends of the M branches of the third switching control circuit from the MCU are the same, level signals received by input ends of the M branches of the fourth switching control circuit from the MCU are the same, the level signals received by the input ends of the M branches of the third switching control circuit from the MCU are different from the level signals received by the input ends of the M branches of the fourth switching control circuit from the MCU, and the output level of the third switching control circuit is different from the output level of the fourth switching control circuit.

For example, each branch of the first switching control circuit, the second switching control circuit, the third switching control circuit, and the fourth switching control circuit includes a plurality of input ends. When MOSFETs in the first switching control circuit, the second switching control circuit, the third switching control circuit, and the fourth switching control circuit shown in FIG. 9 are all N-type MOSFETs, or when MOSFETs close to the input ends in the branches of the first switching control circuit and the fourth switching control circuit shown in FIG. 9 are all P-type MOSFETs, and MOSFETs close to the output ends are all N-type MOSFETs (MOSFETs in the second switching control circuit and the third switching control circuit are not limited, and N-type MOSFETs or P-type MOSFETs may be used), an input end of each of the three branches of the first switching control circuit and the three branches of the second switching control circuit is connected to a pin of the MCU, and different input ends are connected to different pins of the MCU. For example, input ends 3 of the branch 1, the branch 2, and the branch 3 of the first switching control circuit shown in FIG. 9 are separately connected to different pins of the MCU, and input ends 3 of the branch 1, the branch 2, and the branch 3 of the second switching control circuit are separately connected to different pins of the MCU. However, level signals received by input ends of the three branches of the first switching control circuit from the MCU are the same, and level signals received by input ends of the three branches of the second switching control circuit from the MCU are the same. In addition, the level signals received by the input ends of the three branches of the first switching control circuit from the MCU are different from the level signals received by the input ends of the three branches of the second switching control circuit from the MCU. For example, the level signals received by the input ends of the three branches of the first switching control circuit from the MCU are all at the first level, and the level signals received by the input ends of the three branches of the second switching control circuit from the MCU are all at the second level, so that the output level of the first switching control circuit is different from the output level of the second switching control circuit, and the first switch group and the third switch group are not simultaneously turned on or off.

Similarly, an input end of each of the three branches of the third switching control circuit and the three branches of the fourth switching control circuit is connected to a pin of the MCU, and different input ends are connected to different pins of the MCU. For example, input ends 3 of the branch 1, the branch 2, and the branch 3 of the third switching control circuit shown in FIG. 9 are separately connected to different pins of the MCU, and input ends 3 of the branch 1, the branch 2, and the branch 3 of the fourth switching control circuit are separately connected to different pins of the MCU. However, level signals received by input ends of the three branches of the third switching control circuit from the MCU are the same, and level signals received by input ends of the three branches of the fourth switching control circuit from the MCU are the same. In addition, the level signals received by the input ends of the three branches of the third switching control circuit from the MCU are different from the level signals received by the input ends of the three branches of the fourth switching control circuit from the MCU. For example, the level signals received by the input ends of the three branches of the third switching control circuit from the MCU are all at the first level, and the level signals received by the input ends of the three branches of the fourth switching control circuit from the MCU are all at the second level, so that the output level of the third switching control circuit is different from the output level of the fourth switching control circuit, and the second switch group and the fourth switch group are not simultaneously turned on or off.

Based on the foregoing design, circuit designs of the first switching control circuit, the second switching control circuit, the third switching control circuit, and the fourth switching control circuit are similar. The input signal of the first switching control circuit and the input signal of the second switching control circuit are set to different level signals, so that the first switch group controlled by the first switching control circuit and the third switch group controlled by the second switching control circuit are not simultaneously turned on or off. Similarly, the input signal of the fourth switching control circuit and the input signal of the third switching control circuit are set to different level signals, so that the fourth switch group controlled by the fourth switching control circuit and the second switch group controlled by the third switching control circuit are not simultaneously turned on or off. Therefore, a case in which loops are cross-connected can be avoided, safety performance is improved, and a driving safety risk is reduced.

### Design C

In the design C, each of the N branches of the first switching control circuit, each of the M branches of the fourth switching control circuit, the second input unit of the second switching control circuit, and the fourth input unit of the third switching control circuit may all be the branch shown in FIG. 6. The first input unit in the second switching control circuit and the third input unit in the third switching control circuit may be the circuit module shown in FIG. 7.

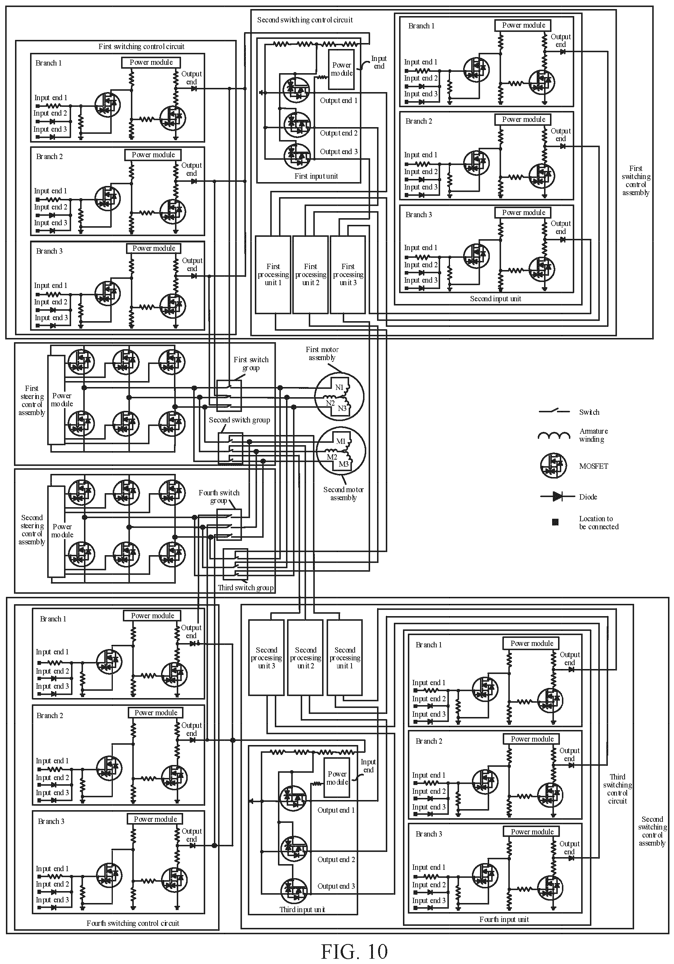

FIG. 10 is yet another circuit diagram of a steering control apparatus according to an embodiment of this application.

For example, N = M = 3. As shown in FIG. 10, a second switching control circuit may include a first input unit, a second input unit, and three first processing units (for example, a first processing unit 1, a first processing unit 2, and a first processing unit 3 shown in FIG. 10). The three first processing units are in a one-to-one correspondence with three switches in the third switch group. Each of the three first processing units is connected to one corresponding switch, and is configured to obtain a first control signal based on an output level of the first input unit and an output level of the second input unit, where the first control signal is used to control turning on or off of the corresponding switch. The first input unit may include one input end and three output ends. The input end is connected to output ends of three branches of the first switching control circuit. The three output ends are in a one-to-one correspondence with the three first processing units. Each of the three output ends of the first input unit is connected to one corresponding first processing unit. The second input unit includes three branches. The three branches are in a one-to-one correspondence with the three first processing units. An output end of each of the three branches is connected to one corresponding first processing unit.

Similarly, the third switching control circuit includes a third input unit, a fourth input unit, and three second processing units. The three second processing units are in a one-to-one correspondence with three switches in the second switch group. Each of the three second processing units is connected to one corresponding switch, and is configured to obtain a second control signal based on an output level of the third input unit and an output level of the fourth input unit, where the second control signal is used to control turning on or off of the corresponding switch. The third input unit includes one input end and three output ends. The input end is connected to output ends of three branches of the fourth switching control circuit. The three output ends are in a one-to-one correspondence with three second processing units. Each of the three output ends of the third input unit is connected to one corresponding second processing unit. The fourth input unit includes three branches. The three branches are in a one-to-one correspondence with the three second processing units. An output end of each of the three branches is connected to one corresponding second processing unit.

Optionally, when the output levels received by each of the N first processing units from the first input unit and the second input unit are all the first level, the first control signal obtained by each first processing unit is at the first level, and is used to control the corresponding switch to be turned on; or when at least one of the output levels received by each of the N first processing units from the first input unit and the second input unit is the second level, the first control signal obtained by each first processing unit is at the second level, and is used to control the corresponding switch to be turned off. When the output levels received by each of the M second processing units from the third input unit and the fourth input unit are all the first level, the second control signal obtained by each second processing unit is at the first level, and is used to control the corresponding switch to be turned on; or when at least one of the output levels received by each of the M second processing units from the third input unit and the fourth input unit is the second level, the second control signal obtained by each second processing unit is at the second level, and is used to control the corresponding switch to be turned off.

For example, as shown in FIG. 10, when output levels received by the first processing unit 1, the first processing unit 2, and the first processing unit 3 from the first input unit and the second input unit separately are all high levels, the first control signal obtained by each first processing unit is at a high level, and is used to control the corresponding switch to be turned on. Alternatively, when at least one of output levels received by the first processing unit 1, the first processing unit 2, and the first processing unit 3 from the first input unit and the second input unit is a low level, the first control signal obtained by each first processing unit is at a low level, and is used to control the corresponding switch to be turned off.

Similarly, when output levels received by a second processing unit 1, a second processing unit 2, and a second processing unit 3 from the third input unit and the fourth input unit separately are all high levels, a second control signal obtained by each second processing unit is at a high level, and is used to control the corresponding switch to be turned on. Alternatively, when at least one of output levels received by a second processing unit 1, a second processing unit 2, and a second processing unit 3 from the third input unit and the fourth input unit separately is a low level, the second control signal obtained by each second processing unit is at a low level, and is used to control the corresponding switch to be turned off.

Optionally, if a level signal received by the input end of the first input unit is the first level, output levels of the N output ends of the first input unit are all the second level; or if a level signal received by the input end of the first input unit is the second level, output levels of the N output ends of the first input unit are all the first level. If a level signal received by the input end of the third input unit is at the first level, output levels of the M output ends of the third input unit are all the second level; or if a level signal received by the input end of the third input unit is at the second level, output levels of the M output ends of the third input unit are all the first level.

For example, when MOSFETs shown in FIG. 10 are N-type MOSFETs, if the level signal received by the input end of the first input unit is at a high level, the output levels of the three output ends of the first input unit are all low levels; or if the level signal received by the input end of the first input unit is at a low level, the output levels of the three output ends of the first input unit are all high levels.

Similarly, if the level signal received by the input end of the third input unit is at a high level, the output levels of the three output ends of the third input unit are all low levels; or if the level signal received by the input end of the third input unit is at a low level, the output levels of the three output ends of the third input unit are all high levels.

It should be noted that, a case in which MOSFETs close to the input ends in the branches of the first switching control circuit, the second input unit, the fourth input unit, and the fourth switching control circuit shown in FIG. 10 are all P-type MOSFETs, and MOSFETs close to the output ends are all N-type MOSFETs (MOSFETs in the second switching control circuit, the first input unit, the third input unit, and the third switching control circuit are not limited, and may be N-type MOSFETs or P-type MOSFETs) is the same as a case in which MOSFETs are all N-type MOSFETs. For related content, refer to the foregoing related descriptions. For brevity, details are not described herein again.

Based on the design C, optionally, an input end of each of the N branches of the first switching control circuit and the N branches of the second input unit is connected to a pin of the MCU. Different input ends are connected to different pins of the MCU. Level signals received by input ends of the N branches of the first switching control circuit from the MCU are the same. Level signals received by input ends of the N branches of the second input unit from the MCU are the same. The level signals received by the input ends of the N branches of the first switching control circuit from the MCU are different from the level signals received by the input ends of the N branches of the second input unit from the MCU, so that the output level of the first switching control circuit is different from the output level of the second input unit. An input end of each of the M branches of the fourth switching control circuit and the M branches of the fourth input unit is connected to a pin of the MCU. Different input ends are connected to different pins of the MCU. Level signals received by input ends of the M branches of the fourth switching control circuit from the MCU are the same. Level signals received by input ends of the M branches of the fourth input unit from the MCU are the same. The level signals received by the input ends of the M branches of the fourth switching control circuit from the MCU are different from the level signals received by the input ends of the M branches of the fourth input unit from the MCU.

For example, each branch of the first switching control circuit, the second input unit, the fourth switching control circuit, and the fourth input unit includes a plurality of input ends. When MOSFETs in the first switching control circuit, the second input unit, the fourth switching control circuit, and the fourth input unit shown in FIG. 10 are all N-type MOSFETs, or when MOSFETs close to the input ends in the branches of the first switching control circuit, the second input unit, the fourth switching control circuit, and the fourth input unit shown in FIG. 10 are all P-type MOSFETs, and MOSFETs close to the output ends are all N-type MOSFETs (MOSFETs in the second switching control circuit, the first input unit, the third input unit, and the third switching control circuit are not limited, and N-type MOSFETs or P-type MOSFETs may be used), an input end of each of the three branches of the first switching control circuit and the three branches of the second input unit is connected to a pin of the MCU, and different input ends are connected to different pins of the MCU. For example, input ends 3 of the branch 1, the branch 2, and the branch 3 of the first switching control circuit shown in FIG. 10 are separately connected to different pins of the MCU, and input ends 3 of the branch 1, the branch 2, and the branch 3 of the second input unit are separately connected to different pins of the MCU. However, level signals received by input ends of the three branches of the first switching control circuit from the MCU are the same, and level signals received by input ends of the three branches of the second input unit from the MCU are the same. In addition, the level signals received by the input ends of the three branches of the first switching control circuit from the MCU are different from the level signals received by the input ends of the three branches of the second input unit from the MCU. For example, the level signals received by the input ends of the three branches of the first switching control circuit from the MCU are all at the first level, and the level signals received by the input ends of the three branches of the second input unit from the MCU are all at the second level, so that the output level of the first switching control circuit is different from the output level of the second input unit.

Similarly, an input end of each of the three branches of the fourth switching control circuit and the three branches of the fourth input unit is connected to a pin of the MCU, and different input ends are connected to different pins of the MCU. For example, input ends 3 of the branch 1, the branch 2, and the branch 3 of the fourth switching control circuit shown in FIG. 10 are separately connected to different pins of the MCU, and input ends 3 of the branch 1, the branch 2, and the branch 3 of the fourth input unit are separately connected to different pins of the MCU. However, level signals received by input ends of the three branches of the fourth switching control circuit from the MCU are the same, and level signals received by input ends of the three branches of the fourth input unit from the MCU are the same. In addition, the level signals received by the input ends of the three branches of the fourth switching control circuit from the MCU are different from the level signals received by the input ends of the three branches of the fourth input unit from the MCU. For example, the level signals received by the input ends of the three branches of the fourth switching control circuit from the MCU are all at the first level, and the level signals received by the input ends of the three branches of the fourth input unit from the MCU are all at the second level, so that the output level of the fourth switching control circuit is different from the output level of the fourth input unit.

It should be noted that in FIG. 5 to FIG. 10, when different MOSFETs are used, a circuit connection manner and a level signal design may be adjusted independently. This is not limited in this application.

Based on the design C, circuit designs of the first switching control circuit, the second input unit, the fourth switching control circuit, and the fourth input unit are similar. Circuit designs of the first input unit and the third input unit are similar. The output ends of the N branches of the first switching control circuit are connected to the input ends of the first input unit. In other words, output signals of the output ends of the N branches of the first switching control circuit are used as input signals of the input ends of the first input unit. Based on the output signals of the first switching control circuit, the first input unit outputs a level signal different from that of the first switching control circuit. For example, when the output signals of the branches of the first switching control circuit are all at the first level, the first input unit outputs the second level. In addition, the input signal of the first switching control circuit and the input signal of the second input unit are set to different level signals, so that the output signal of the second input unit is different from the output signal of the first switching control circuit. Then the first processing unit performs logical determining on the output signal of the first input unit and the output signal of the second input unit. When one of the output signal of the first processing unit and the output signal of the second processing unit is different from the output signal of the first switching control circuit, it can be ensured that the first switch group controlled by the first switching control circuit and the third switch group controlled by the second switching control circuit are not simultaneously turned on or off. Similarly, the output ends of the M branches of the fourth switching control circuit are connected to the input ends of the third input unit. In other words, output signals of the output ends of the M branches of the fourth switching control circuit are used as input signals of the input ends of the third input unit. Based on the output signals of the fourth switching control circuit, the third input unit outputs a level signal different from that of the fourth switching control circuit. For example, when the output signals of the branches of the fourth switching control circuit are all at the first level, the third input unit outputs the second level. In addition, the input signal of the fourth switching control circuit and the input signal of the fourth input unit are set to different level signals, so that the output signal of the fourth input unit is different from the output signal of the fourth switching control circuit. Then the second processing unit performs logical determining on the output signal of the fourth input unit and the output signal of the fourth input unit. When one of the output signal of the fourth processing unit and the output signal of the fourth processing unit is different from the output signal of the fourth switching control circuit, it can be ensured that the fourth switch group controlled by the fourth switching control circuit and the second switch group controlled by the second switching control circuit are not simultaneously turned on or off.

Based on the design of the steering control apparatus, the two steering control assemblies are respectively connected to the two motor assemblies. When one of the steering control assemblies is faulty, the steering control assembly that is not faulty may independently drive the two motor assemblies simultaneously, to ensure stability of a steering effect. Different switch groups connected to a same motor assembly are separately controlled through different switching control circuits, so that the different switch groups connected to the same motor assembly are not simultaneously turned on or off. Therefore, a case in which loops are cross-connected is avoided, safety performance is improved, and a driving safety risk is reduced.

It should be noted that, based on the foregoing design, the first steering control assembly provides the drive current for the first motor assembly when the first switch group is turned on, and the second steering control assembly provides the drive current for the second motor assembly when the fourth switch group is turned on. Alternatively, the first steering control assembly provides the drive current for the second motor assembly when the second switch group is turned on, and the second steering control assembly provides the drive current for the first motor assembly when the third switch group is turned on. This may be denoted as a normal working mode. When the second steering control assembly is faulty or disabled, the first steering control assembly provides the drive current for the first motor assembly when the first switch group is turned on, and provides the drive current for the second motor assembly when the second switch group is turned on. This may be denoted as a standby working mode 1. When the first steering control assembly is faulty or disabled, the second steering control assembly provides the drive current for the first motor assembly when the third switch group is turned on, and provides the drive current for the second motor assembly when the fourth switch group is turned on. This may be denoted as a standby working mode 2.

In other words, in the normal working mode, the first steering control assembly independently provides the drive current for the first motor assembly, and the second steering control assembly independently provides the drive current for the second motor assembly. The first steering control assembly and the second steering control assembly work together, to drive the first motor assembly and the second motor assembly separately, so as to implement a steering operation. In the standby working mode 1, the first steering control assembly not only needs to provide the drive current for the first motor assembly, but also needs to provide the drive current for the second motor assembly. The first steering control assembly independently drives the first motor assembly and the second motor assembly, to implement a steering operation. In the standby working mode 2, the second steering control assembly not only needs to provide the drive current for the first motor assembly, but also needs to provide the drive current for the second motor assembly. The second steering control assembly independently drives the first motor assembly and the second motor assembly, to implement a steering operation.

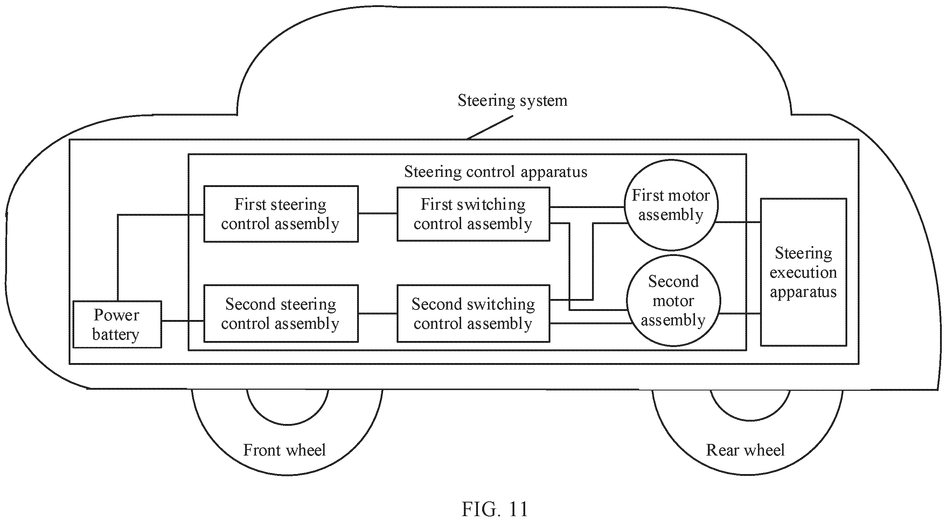

An embodiment of this application further provides a steering system. As shown in FIG. 11, the steering system includes the steering control apparatus described above, a power battery, and a steering execution apparatus. The steering control apparatus is connected to the power battery and the steering execution apparatus. The power battery is used to supply electric energy to the steering control apparatus. The steering control apparatus is configured to generate a steering signal. The steering execution apparatus is configured to control steering of a vehicle based on the steering signal.

The power battery may provide a drive current for the first motor assembly and the second motor assembly separately by driving the steering control apparatus. The first motor assembly and the second motor assembly may cooperate with the steering execution apparatus. The steering execution apparatus may be coupled to front wheels and rear wheels separately. The first motor assembly and the second motor assembly may convert the drive current provided by the steering control apparatus into mechanical energy, to drive, via the steering execution apparatus, the front wheels and/or the rear wheels for steering.

It should be noted that the steering system in this application may be a steering motor assembly. This is not limited in this application.

An embodiment of this application further provides a vehicle, and the vehicle includes the foregoing steering system.

It should be noted that components in embodiments of this application, such as a diode, a resistor, an armature winding, and an MOSFET, are all examples, and may be replaced with components with a same or similar function. Alternatively, based on embodiments of this application, a circuit connection manner is properly changed based on same or similar components obtained after the replacement. This is not limited in embodiments of this application.

Terms such as "unit", "module", and "assembly" used in this specification may indicate circuit-related entities, hardware, firmware, and combinations of hardware and software.

A person of ordinary skill in the art may be aware that, the illustrative logical blocks (illustrative logical block) and circuits described in embodiments disclosed in this specification may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiments are merely examples. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

In the foregoing embodiments, all or some of the functions of the function units may be implemented by using software, hardware, firmware, or any combination thereof. When software is used to implement the embodiments, the embodiments may be implemented entirely or partially in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), or a semiconductor medium (for example, a solid state disk (solid state disk, SSD)).

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A steering control apparatus, wherein the apparatus comprises a first steering control assembly, a second steering control assembly, a first switching control assembly, a second switching control assembly, a first motor assembly, and a second motor assembly, wherein
the first steering control assembly comprises a first switch group connected to the first motor assembly and a second switch group connected to the second motor assembly, and is configured to: provide a drive current for the first motor assembly when the first switch group is turned on, and provide a drive current for the second motor assembly when the second switch group is turned on;
the second steering control assembly comprises a third switch group connected to the first motor assembly and a fourth switch group connected to the second motor assembly, and is configured to: provide a drive current for the first motor assembly when the third switch group is turned on, and provide a drive current for the second motor assembly when the fourth switch group is turned on;
the first switching control assembly comprises a first switching control circuit configured to control the first switch group and a second switching control circuit configured to control the third switch group, and an output level of the first switching control circuit is different from an output level of the second switching control circuit; and
the second switching control assembly comprises a third switching control circuit configured to control the second switch group and a fourth switching control circuit configured to control the fourth switch group, and an output level of the third switching control circuit is different from an output level of the fourth switching control circuit.

2. The apparatus according to claim 1, wherein the first motor assembly comprises N armature windings, and the second motor assembly comprises M armature windings, wherein N and M are positive integers; and
a quantity of switches in the first switch group and a quantity of switches in the third switch group are the same as a quantity of armature windings comprised in the first motor assembly; and a quantity of switches in the second switch group and a quantity of switches in the fourth switch group are the same as a quantity of armature windings comprised in the second motor assembly.

3. The apparatus according to claim 2, wherein the first switching control circuit comprises N branches, the N branches are in a one-to-one correspondence with N switches in the first switch group, and an output end of each of the N branches is connected to one corresponding switch; and when output levels of the N branches are all a first level, the switches in the first switch group are turned on; or when output levels of the N branches are all a second level, the switches in the first switch group are turned off; and
the fourth switching control circuit comprises M branches, the M branches are in a one-to-one correspondence with M switches in the fourth switch group, and an output end of each of the M branches is connected to one corresponding switch; and when output levels of the M branches are all the first level, the switches in the fourth switch group are turned on; or when output levels of the M branches are all the second level, the switches in the fourth switch group are turned off.

4. The apparatus according to claim 3, wherein each of the N branches comprises one or more input ends, and each input end is configured to receive one level signal; and
each of the M branches comprises one or more input ends, and each input end is configured to receive one level signal.

5. The apparatus according to claim 4, wherein the level signal received by the one or more input ends comprises a level signal output by a motor control unit MCU.

6. The apparatus according to claim 5, wherein the level signal received by the one or more input ends further comprises a level signal output by a power management chip and/or a level signal output by a drive chip.

7. The apparatus according to any one of claims 4 to 6, wherein a level signal received by each of the N branches comprises a plurality of level signals; and when at least one of the plurality of level signals is at the second level, an output level of each of the N branches is the second level; or when each of the plurality of level signals is at the first level, an output level of each of the N branches is the first level; and
a level signal received by each of the M branches comprises a plurality of level signals; and when at least one of the plurality of level signals is at the second level, an output level of each of the M branches is the second level; or when each of the plurality of level signals is at the first level, an output level of each of the M branches is the first level.

8. The apparatus according to any one of claims 3 to 6, wherein the second switching control circuit comprises one input end and N output ends, the input end is connected to output ends of the N branches of the first switching control circuit, the N output ends are in a one-to-one correspondence with N switches in the third switch group, and each of the N output ends is connected to one corresponding switch; and when output levels of the N output ends are all the first level, the switches in the third switch group are turned on, or when output levels of the N output ends are all the second level, the switches in the third switch group are turned off; and
the third switching control circuit comprises one input end and M output ends, the input end is connected to output ends of the M branches of the fourth switching control circuit, the M output ends are in a one-to-one correspondence with M switches in the second switch group, and each of the M output ends is connected to one corresponding switch; and when output levels of the M output ends are all the first level, the switches in the second switch group are turned on, or when output levels of the M output ends are all the second level, the switches in the second switch group are turned off.

9. The apparatus according to claim 7, wherein that an output level of the first switching control circuit is different from an output level of the second switching control circuit comprises:
when the output levels of the output ends of the N branches of the first switching control circuit are all the first level, the switches in the first switch group are turned on, a level signal of the input end of the second switching control circuit is the first level, output levels of the N output ends of the second switching control circuit are all the second level, and the switches in the third switch group are turned off; or when the output levels of the output ends of the N branches of the first switching control circuit are all the second level, the switches in the first switch group are turned off, a level signal of the input end of the second switching control circuit is the second level, output levels of the N output ends of the second switching control circuit are all the first level, and the switches in the third switch group are turned on; and
that an output level of the third switching control circuit is different from an output level of the fourth switching control circuit comprises:
when the output levels of the output ends of the M branches of the fourth switching control circuit are all the first level, the switches in the fourth switch group are turned on, a level signal of the input end of the third switching control circuit is the first level, output levels of the M output ends of the third switching control circuit are all the second level, and the switches in the second switch group are turned off; or when the output levels of the output ends of the M branches of the fourth switching control circuit are all the second level, the switches in the fourth switch group are turned off, a level signal of the input end of the third switching control circuit is the second level, output levels of the M output ends of the third switching control circuit are all the first level, and the switches in the second switch group are turned on.

10. The apparatus according to any one of claims 3 to 6, wherein the second switching control circuit comprises N branches, the N branches of the second switching control circuit are in a one-to-one correspondence with N switches in the third switch group, and an output end of each of the N branches of the second switching control circuit is connected to one corresponding switch; and when output levels of the N branches of the second switching control circuit are all the first level, the switches in the third switch group are turned on; or when output levels of the N branches of the second switching control circuit are all the second level, the switches in the third switch group are turned off; and
the third switching control circuit comprises M branches, the M branches of the third switching control circuit are in a one-to-one correspondence with M switches in the second switch group, and an output end of each of the M branches of the third switching control circuit is connected to one corresponding switch; and when output levels of the M branches of the third switching control circuit are all the first level, the switches in the second switch group are turned on; or when output levels of the M branches of the third switching control circuit are all the second level, the switches in the second switch group are turned off.

11. The apparatus according to claim 10, wherein that an output level of the first switching control circuit is different from an output level of the second switching control circuit comprises:
an input end of each of the N branches of the first switching control circuit and the N branches of the second switching control circuit is connected to a pin of the MCU, different input ends are connected to different pins of the MCU, level signals received by input ends of the N branches of the first switching control circuit from the MCU are the same, level signals received by input ends of the N branches of the second switching control circuit from the MCU are the same, the level signals received by the input ends of the N branches of the first switching control circuit from the MCU are different from the level signals received by the input ends of the N branches of the second switching control circuit from the MCU, and the output level of the first switching control circuit is different from the output level of the second switching control circuit; and
that an output level of the third switching control circuit is different from an output level of the fourth switching control circuit comprises:
an input end of each of the M branches of the third switching control circuit and the M branches of the fourth switching control circuit is connected to a pin of the MCU, different input ends are connected to different pins of the MCU, level signals received by input ends of the M branches of the third switching control circuit from the MCU are the same, level signals received by input ends of the M branches of the fourth switching control circuit from the MCU are the same, the level signals received by the input ends of the M branches of the third switching control circuit from the MCU are different from the level signals received by the input ends of the M branches of the fourth switching control circuit from the MCU, and the output level of the third switching control circuit is different from the output level of the fourth switching control circuit.

12. The apparatus according to any one of claims 3 to 6, wherein the second switching control circuit comprises a first input unit, a second input unit, and N first processing units, wherein
the N first processing units are in a one-to-one correspondence with N switches in the third switch group, and each of the N first processing units is connected to one corresponding switch, and is configured to obtain a first control signal based on an output level of the first input unit and an output level of the second input unit, wherein the first control signal is used to control turning on or off of the corresponding switch;
the first input unit comprises one input end and N output ends, the input end is connected to output ends of the N branches of the first switching control circuit, the N output ends are in a one-to-one correspondence with the N first processing units, and each of the N output ends of the first input unit is connected to one corresponding first processing unit; and
the second input unit comprises N branches, the N branches are in a one-to-one correspondence with the N first processing units, and an output end of each of the N branches is connected to one corresponding first processing unit; and
the third switching control circuit comprises a third input unit, a fourth input unit, and M second processing units, wherein
the M second processing units are in a one-to-one correspondence with M switches in the second switch group, and each of the M second processing units is connected to one corresponding switch, and is configured to obtain a second control signal based on an output level of the third input unit and an output level of the fourth input unit, wherein the second control signal is used to control turning on or off of the corresponding switch;
the third input unit comprises one input end and M output ends, the input end is connected to output ends of the M branches of the fourth switching control circuit, the M output ends are in a one-to-one correspondence with the M second processing units, and each of the M output ends of the third input unit is connected to one corresponding second processing unit; and
the fourth input unit comprises M branches, the M branches are in a one-to-one correspondence with the M second processing units, and an output end of each of the M branches is connected to one corresponding second processing unit.

13. The apparatus according to claim 12, wherein when the output levels received by each of the N first processing units from the first input unit and the second input unit are all the first level, the first control signal obtained by each first processing unit is at the first level, and is used to control the corresponding switch to be turned on; or when at least one of the output levels received by each of the N first processing units from the first input unit and the second input unit is the second level, the first control signal obtained by each first processing unit is at the second level, and is used to control the corresponding switch to be turned off; and
when the output levels received by each of the M second processing units from the third input unit and the fourth input unit are all the first level, the second control signal obtained by each second processing unit is at the first level, and is used to control the corresponding switch to be turned on; or when at least one of the output levels received by each of the M second processing units from the third input unit and the fourth input unit is the second level, the second control signal obtained by each second processing unit is at the second level, and is used to control the corresponding switch to be turned off.

14. The apparatus according to claim 12 or 13, wherein if a level signal received by the input end of the first input unit is at the first level, output levels of the N output ends of the first input unit are all the second level; or if a level signal received by the input end of the first input unit is the second level, output levels of the N output ends of the first input unit are all the first level; and
if a level signal received by the input end of the third input unit is at the first level, output levels of the M output ends of the third input unit are all the second level; or if a level signal received by the input end of the third input unit is at the second level, output levels of the M output ends of the third input unit are all the first level.

15. The apparatus according to any one of claims 12 to 14, wherein an input end of each of the N branches of the first switching control circuit and the N branches of the second input unit is connected to a pin of the MCU, different input ends are connected to different pins of the MCU, level signals received by input ends of the N branches of the first switching control circuit from the MCU are the same, level signals received by input ends of the N branches of the second input unit from the MCU are the same, and the level signals received by the input ends of the N branches of the first switching control circuit from the MCU are different from the level signals received by the input ends of the N branches of the second input unit from the MCU, so that the output level of the first switching control circuit is different from the output level of the second input unit; and
an input end of each of the M branches of the fourth switching control circuit and the M branches of the fourth input unit is connected to a pin of the MCU, different input ends are connected to different pins of the MCU, level signals received by input ends of the M branches of the fourth switching control circuit from the MCU are the same, level signals received by input ends of the M branches of the fourth input unit from the MCU are the same, and the level signals received by the input ends of the M branches of the fourth switching control circuit from the MCU are different from the level signals received by the input ends of the M branches of the fourth input unit from the MCU, so that the output level of the fourth switching control circuit is different from the output level of the fourth input unit.

16. The apparatus according to any one of claims 2 to 15, wherein N = M.

17. The apparatus according to any one of claims 1 to 16, wherein the first steering control assembly comprises a first control circuit and a first switching circuit, the first switching circuit comprises the first switch group and the second switch group, and the first control circuit is configured to: provide the drive current for the first motor assembly when the first switch group is turned on, and provide the drive current for the second motor assembly when the second switch group is turned on; and
the second steering control assembly comprises a second control circuit and a second switching circuit, the second switching circuit comprises the third switch group and the fourth switch group, and the second control circuit is configured to: provide the drive current for the first motor assembly when the third switch group is turned on, and provide the drive current for the second motor assembly when the fourth switch group is turned on.

18. A steering system, wherein the system comprises the steering control apparatus according to any one of claims 1 to 17, a power battery, and a steering execution apparatus, wherein the steering control apparatus is connected to the power battery and the steering execution apparatus, the power battery is used to supply electric energy to the steering control apparatus, the steering control apparatus is configured to generate a steering signal, and the steering execution apparatus is configured to control steering of a vehicle based on the steering signal.

19. A vehicle, wherein the vehicle comprises the steering system according to claim 18.
